# EUROPÄISCHE PATENTSCHRIFT

(11) **EP 0 308 822 B1**
(45) Veröffentlichungstag und Bekanntmachung des Hinweises auf die Patenterteilung: **15.09.1993**
(21) Anmeldenummer: 88115178.1
(22) Anmeldetag: 16.09.1988
(51) Int. Cl.: B23Q 3/155

(54) **Werkzeugmaschine**
Machine tool
Machine-outil

(30) Priorität: 23.09.1987 DE 3732055
(43) Veröffentlichungstag der Anmeldung: 29.03.1989
(73) Patentinhaber: Chiron-Werke GmbH & Co. KG, 78532 Tuttlingen (DE)
(72) Erfinder: Winkler, Hans-Henning, Dr., D-7200 Tuttlingen (DE); Rütschle, Eugen, D-7202 Mühlheim (DE)
(74) Vertreter: Witte, Alexander, Dr.-Ing.

(56) Entgegenhaltungen:
- EP-A- 0 175 305
- DE-A- 1 949 390
- DE-A- 2 735 260
- FR-A- 2 424 793
- GB-A- 1 547 469
- US-A- 4 399 603
- PATENT ABSTRACTS OF JAPAN, Band 8, Nr. 9 (M-268)[1446], 14. Januar 1984;& JP-A-58 171 236 (TOSHIBA KIKAI K.K.) 07-10-1983

## Beschreibung

Die Erfindung betrifft eine Werkzeugmaschine mit einem Magazin für Werkzeughalter, die einerseits im Magazin in entlang einer Bahn verfahrbaren Aufnahmen angeordnet und andererseits an einer Übergabeposition des Magazins mittels einer Überführeinrichtung aus der Aufnahme in einer Hand eines Greifarms überführbar sind, wobei die Überführeinrichtung in horizontaler Richtung ausfahrbar ist und die Aufnahmen bei ausgefahrener Überführeinrichtung mit den noch im Magazin befindlichen Werkzeughaltern hinter der Überführeinrichtung verfahrbar sind.

Eine Werkzeugmaschine der vorstehend genannten Art ist aus dem Dokument DE-A 35 21 009 bekannt.

Bei der bekannten Werkzeugmaschine ist ein Spindelstock in vertikaler Richtung gegenüber einem Werkstücktisch verfahrbar. An der Oberseite des Spindelstocks ist in dessen rückwärtigem Bereich ein Werkzeugmagazin angeordnet, das in Draufsicht die Gestalt eines Hufeisens aufweist. Von den beiden vorderen Enden des Hufeisens sind Werkzeughalter aus einer Übernahme- bzw. Übergabeposition mittels Greifarmen entnehmbar bzw. in diese einsetzbar, um Werkzeughalter zwischen den Positionen des Werkzeugsmagazins und einer Spindelposition in der Aufnahme des Spindelstocks auszutauschen.

Die Aufnahmen des Werkzeugmagazins im Bereich der genannten Positionen sind als U-förmige Hände ausgebildet, die zur Übergabeseite hin offen sind. Während des Übergabevorganges steht der U-förmigen Hand des Werkzeugmagazins eine komplementär ausgebildete Hand des Greifarmes gegenüber. Die Werkzeughalter können nun mittels einer Überführeinrichtung aus der Hand des Werkzeugmagazins in die Hand des Greifarms überführt werden oder umgekehrt. Hierzu ist oberhalb der hufeisenförmigen Förderbahn für die Hände des Werkzeugmagazins eine Stange vorgesehen, die sich parallel zu den Schenkeln des Hufeisens erstreckt und an ihrem vorderen freien Ende Halteteile für das Verfahren der Werkzeughalter aufweist. Die Halteteile haben, in rechtwinkliger Ansicht zur Ausfahrrichtung der Überführeinrichtung eine Form, die der Außenkontur des Werkzeughalters, insbesondere der Kegelform im oberen Kegelbereich des Werkzeughalters angepaßt ist. Auf diese Weise wird der Werkzeughalter während des Ausfahrens und des Einfahrens formschlüssig von den Halteteilen gehalten und kann weder nach vorne noch nach hinten kippen.

Die verfahrbaren Aufnahmen des Werkzeugmagazins sind bei der bekannten Werkzeugmaschine so ausgebildet, daß die Werkzeughalter mit einer Aussparung an ihrem Umfang in einen entsprechenden Vorsprung der Aufnahme greifen, so daß die Werkzeughalter unverdrehbar in den Aufnahmen gehalten werden und daher auch bei hohen Verfahrgeschwindigkeiten, insbesondere in den Kurven der hufeisenförmigen Bahn, eine relative Drehlage nicht verlassen können. Entsprechendes gilt für die Hände an den freien Enden der Greifarme, die ebenfalls so ausgebildet sind, daß sie die Werkzeughalter unverdrehbar halten.

Auf diese Weise wird erreicht, daß die Werkzeughalter in definierter Drehlage in die Aufnahme des Spindelstocks eingeführt werden können, so daß der dort angeordnete und zum Drehen des Werkzeuges vorgesehene Nutenstein ohne Suchlauf in die zugehörige Nut des Werkzeughalters einfallen und daher den für den Antrieb des Werkzeuges erforderlichen Formschluß zwischen drehbarer Spindel und Werkzeug herstellen kann.

Es hat sich jedoch gezeigt, daß insbesondere bei hohen Werkzeugwechselgeschwindigkeiten die schnelle Übergabe vom Werkzeugmagazin in die Hand des Greifarms nicht störungsfrei verläuft, weil sich die Werkzeuge während der schnellen Übergabe aus ihrer Bezugsposition in eine undefinierte Lage verschieben können. Außerdem ist es bei der bekannten Werkzeugmaschine problematisch, die noch im Magazin befindlichen Werkzeughalter in ihren Aufnahmen zu verfahren, wenn die Überführeinrichtungausgefahren ist, weil die durch die Übergabeposition durchfahrenden Werkzeughalter an dieser Stelle in einer Richtung senkrecht zur Verfahrrichtung nicht geführt sind. Wenn die Übergabeposition sich an einer Stelle des Magazins befindet, an der die Aufnahmen entlang einer gekrümmten Bahn verfahren werden, so kann dies dazu führen, daß die Werkzeughalter an der Übergabeposition aus den Aufnahmen infolge von Zentrifugalkräften austreten oder sich zumindest in den Aufnahmen aus ihrer definierten Drehlage lösen.

Aus dem Dokument DE-A-27 35 260 ist eine Werkzeugwechselvorrichtung für ein Bearbeitungszentrum mit horizontalachsiger Spindel bekannt. Die Werkzeugwechselvorrichtung besteht im wesentlichen aus einem trommelartigen Magazin für Werkzeughalter, in dem die Werkzeughalter auf zwei konzentrischen Kreisen verteilt angeordnet sind. An derjenigen Umfangsposition des äußeren Kreises, die der Spindel am nächsten liegt, ist ein Übergabeplatz vorgesehen. Der Übergabeplatz kann einerseits von einem Doppelarmgreifer erreicht werden, der sich zwischen dem Übergabeplatz und der Spindelaufnahme befindet, um Werkzeughalter vom Übergabeplatz in die Spindel zu wechseln bzw. umgekehrt. Im Zentrum des trommelartigen Magazins ist ein drehbarer Teleskopgreifer angeordnet, der mit seinem ausfahrbaren Arm jede Position auf beiden Kreisen erreichen kann. Durch Verdrehen des Greifers zusammen mit dem inneren Kreis des Magazins kann wahlweise eine Werkzeughalterposition im Magazin angesteuert und dort ein Werkzeughalter entnommen oder abgelegt werden. In einem zweiten Bewegungsvorgang kann der Greifer auch die Übergabeposition erreichen, so daß insgesamt ein Werkzeugwechsel möglich ist.

In der Greiferhand des Greifers sind Zapfen oder Dübel vorgesehen, um den jeweils ergriffenen Werkzeughalter in seiner Winkelstellung mit Bezug auf die Greiferhand festzulegen.

Der Erfindung liegt daher die Aufgabe zugrunde, eine Werkzeugmaschine der eingangs genannten Art dahingehend weiterzubilden, daß auch bei hohen Werkzeugwechselgeschwindigkeiten eine sichere Übergabe der Werkzeughalter vom Magazin in die Hand des Greifarms ohne Lagefehler möglich ist, wobei bei ausgefahrener Übergabeeinrichtung die Aufnahmen des Magazins sofort wieder störungsfrei verfahren werden können, um einen nachfolgenden Suchlauf einzuleiten.

Diese Aufgabe wird erfindungsgemäß dadurch gelöst, daß die Überführeinrichtung Mittel zur drehfesten Arretierung der Werkzeughalter aufweist, und daS eine Kolben-Zylinder-Einheit mit einem Anschlagteil in vertikaler Richtung zwischen den verfährbaren Aufnahmen und der ausgefahrenen Überführeinrichtung verfahrbar und beim Einfahren der Überführeinrichtung in eine erste Vertikalposition bringbar ist, in der das Anschlagteil beim Einfahren der Überführeinrichtung die Arretiermittel betätigt, während bei ausgefahrener Überführeinrichtung die Kolben-Zylinder-Einheit in eine zweite Vertikalposition bringbar ist, in der das Anschlagteil eine Führung für die in den Aufnahmen verfahrenen Werkzeughalter bildet.

Die der Erfindung zugrundeliegende Aufgabe wird auf diese Weise vollkommen gelöst, weil die Werkzeughalter sich zu keinem Augenblick des Übergabevorganges aus der definierten Drehposition lösen können. Solange die Werkzeughalter noch in der Aufnahme des Werkzeugmagazins enthalten sind, sorgt dort die bereits geschilderte drehfeste Lagerung für eine definierte Bezugsposition und entsprechendes gilt für die Verweildauer der Werkzeughalter in der Hand des Greifarmes. Wenn erfindungsgemäß zusätzlich die Überführeinrichtung mit Mitteln zur drehfesten Arretierung der Werkzeughalter versehen ist, besteht dieser definierte Zustand während der Gesamtdauer des Werkzeugwechsels.

Auf diese Weise wird also erreicht, daß trotz hoher Werkzeugwechselgeschwindigkeiten die bereits erzielten Vorteile der bekannten Werkzeugmaschine erhalten bleiben, weil die Werkzeuge aus der definierten Stellung im Magazin in eine ebenso definierte Stellung in der Aufnahme der Spindel eingewechselt werden können.

Das vertikal verfahrbare Anschlagteil hat darüberhinaus den Vorteil, daß bei ausgefahrener Überführeinrichtung eine äußere Führung für die im übrigen durchlaufenden Werkzeughalter in den Aufnahmen des Magazins gewährleistet wird, wenn das Anschlagteil in eine Vertikalposition verfahren wird, in der beispielsweise die Ringflansche der Werkzeughalter angeordnet sind, die in diesem Falle an der Rückseite des Anschlagteiles entlangfahren, so daß auch bei schneller Durchfahrt der Werkzeughalter - bei ausgefahrener Überführeinrichtung - keine Werkzeughalter durch Fliehkraft aus der Aufnahme in der Übergabeposition herausgeschleudert werden können.

Bei einer bevorzugten Ausgestaltung der Erfindung weisen die Arretiermittel Sperrteile auf, die in Aussparungen an einem Umfang des Werkzeughalters greifen.

Diese Maßnahme hat den Vorteil, daß die ohnehin vorhandenen Aussparungen am Umfang der Werkzeughalter, die auch zur drehfesten Arretierung im Magazin und in der Hand des Greifarms dienen, verwendet werden und keine zusätzlichen Modifikationen an den üblicherweise genormten Werkzeughaltern erforderlich sind.

Bei einer bevorzugten Weiterbildung dieser Variante greifen die Sperrteile in im wesentlichen zur Längsachse der Werkzeughalter paralleler Richtung in die Aussparungen.

Diese Maßnahme hat den Vorteil, daß die drehfeste Arretierung der Werkzeughalter wirklich lückenlos verläuft. In der Aufnahme des Werkzeugmagazins sowie in der Aufnahme der Hand des Greifarms ragt nämlich üblicherweise ein Nutenstein seitlich in eine Aussparung am Umfang des Werkzeughalters. Wird nun der Werkzeughalter rechtwinklig zu seiner Längsachse aus einer dieser Aufnahmen entfernt, so kann in dem Ausmaß, wie sich der Nutenstein der Aufnahme aus der Aussparung entfernt, von oben das Sperrteil in dieselbe Aussparung greifen und damit eine lückenlose Arretierung des Werkzeughalters gewährleisten.

Weiterhin ist bei diesem Ausführungsbeispiel bevorzugt, wenn die Sperrteile unter der Kraft einer Feder in eine Sperrstellung bringbar sind.

Diese Maßnahme hat den Vorteil, daß während der Überführung der Werkzeughalter die Sperrteile selbsttätig unter der Kraft der Feder die Sperrung der Werkzeughalter bewirken, ohne daß zusätzlich Fremdkraft aufgebracht werden muß.

Bei einer weiteren bevorzugten Ausgestaltung dieser Variante sind die Sperrteile mit einem zweiarmigen Hebel versehen.

Diese Maßnahme hat den Vorteil, daß die Sperrteile aus ihrer Sperrstellung, beispielsweise unter der genannten Kraft der Feder, mittels der zweiarmigen Hebel wieder herausgebracht werden können, wobei durch geeignete Wahl der Länge der Hebelarme kurze Betätigungswege in lange Sperr- oder Lösewege oder umgekehrt umgesetzt werden können, je nachdem, wie dies nach den konstruktiven Gegebenheiten des Einzelfalls gewünscht wird.

Bevorzugt werden bei der Erfindung raumfeste Anschläge an der Werkzeugmaschine zur Betätigung der Mittel zur drehfesten Arretierung der Werkzeughalter verwendet, wenn die Überführeinrichtung betätigt wird.

Diese Maßnahme hat den Vorteil, daß die Sperreinrichtung für die Werkzeughalter lediglich durch Anfahren an die raumfesten Anschläge betätigt wird, so daß ein definiertes Lösen bzw. Spannen der Sperreinrichtung gewährleistet werden kann, wenn sich die Werkzeughalter gerade in einer definierten Lage zur Werkzeugmaschine befinden. Dies ist von besonderer Wichtigkeit, weil die Werkzeughalter im Magazin aus einer Bahn entnommen werden müssen, auf der sie sich durch schnelles Verfahren der Aufnahmen des Magazins bewegen. Während des Suchlaufs des Magazins passieren daher viele Werkzeughalter nacheinander die Überführeinrichtung, die zu beiden Seiten des Werkzeughalters bereitsteht, um einen Werkzeughalter von vorne und von hinten ergreifen und in die gegenüberliegende bereitstehende Hand des Greifarmes überführen zu können. Da die Werkzeughalter mit hoher Geschwindigkeit durch den von der Überführeinrichtung freigelassenen Umriß hindurchfahren, muß in jedem Fall gewährleistet sein, daß auch die Sperrmittel in dieser Stellung gelöst sind, damit die durchfahrenden Werkzeughalter unter keinen Umständen an diesen Sperrmitteln anstoßen und damit Schaden nehmen oder die Werkzeugmaschine insgesamt stillsetzen. Wenn jedoch die Sperrmittel durch Anfahren an einen raumfesten Anschlag gelöst werden, kann dies gewährleistet werden, weil lediglich der raumfeste Anschlag so einjustiert werden muß, daß die Sperrmittel gerade in der genannten Durchfahrstellung für die Werkzeughalter gelöst sind.

Bei einer praktischen Ausführungsform der Erfindung ist an einem Basisteil der Überführeinrichtung ein um eine horizontale Achse senkrecht zur Ausfahrrichtung drehbarer zweiarmiger Hebel angeordnet, der im eingefahrenen Zustand der Überführeinrichtung mit einem Arm an einem raumfesten Anschlag zur Anlage kommt und mit einem zweiten Arm ein erstes Sperrteil gegen die Kraft einer Feder aus einer Aussparung am Umfang des Werkzeughalters zieht.

Mit den vorstehend genannten Maßnahmen werden die bereits erwähnten Vorteile in Kombination erzielt.

Besonders bevorzugt ist bei dieser Ausführungsform, wenn die Feder in einem ersten Halteteil angeordnet ist, das den Werkzeughalter in Ausfahrrichtung formschlüssig hält.

Diese Maßnahme hat den Vorteil, daß alle Mittel zum Spannen bzw. Entspannen der Sperreinrichtung an den ausgefahrenen Komponenten der Überführeinrichtung angeordnet sind, so daß keinerlei Kraftzuführung von der Werkzeugmaschine selbst erforderlich ist.

Ein Ausführungsbeispiel der Erfindung zeichnet sich ebenfalls dadurch aus, daß die Feder in einem zweiten Halteteil angeordnet ist, das den Werkzeughalter in Ausfahrrichtung formschlüssig hält.

Die mit dieser Maßnahme erzielbaren Vorteile wurden bereits weiter oben erläutert.

Besonders bevorzugt ist, wenn in Kombination der vorstehend genannten Ausführungsbeispiele das erste Sperrteil auf der der Aufnahme zu weisenden Seite des Werkzeughalters und das zweite Sperrteil auf der dem Greifarm zu weisenden Seite des Werkzeughalters angeordnet ist.

Diese Maßnahme hat den Vorteil, daß nicht nur der Werkzeughalter zweiseitig gehalten werden kann, es ergibt sich ferner der Vorteil, daß die lückenlose Arretierung des Werkzeughalters in einer Drehstellung sowohl während der Entnahme eines Werkzeughalters aus dem Magazin wie auch bei einem Einsetzen in das Magazin gewährleistet ist, weil die auf beiden Seiten des Werkzeughalters angeordneten Sperrmittel lückenlos die Sperrmittel der Aufnahme bzw. der Hand des Greifarms in der weiter oben beschriebenen Weise ablösen können.

Bei einer weiteren bevorzugten Gruppe von Ausführungsbeispielen der Erfindung ist ein drittes Sperrteil zum Verhindern einer Kippbewegung senkrecht zu einer Ausfahrrichtung der Überführeinrichtung vorgesehen.

Diese Maßnahme hat den Vorteil, daß nicht nur ein unbeabsichtigtes Verdrehen sondern auch ein unbeabsichtigtes Verkippen des Werkzeughalters verhindert wird, das vor allem bei schnellen Überführvorgängen auftreten kann, weil infolge der Fliehkraft der mit hoher Geschwindigkeit verfahrenen Werkzeughalter diese verkippen können, weil nur in seltenen Fällen der Schwerpunkt des Werkzeughalters in der Halteebene der Aufnahme, der Überführeinrichtung und der Hand des Greifarms liegt.

Bei einer bevorzugten praktischen Ausgestaltung dieses Ausführungsbeispiels weist das dritte Sperrteil zwei seitlich vom Werkzeughalter angeordnete und rechtwinklig zu dessen Achse verschiebbare Bolzen auf, die im nicht-eingefahrenen Zustand der Überführeinrichtung den Umriß der Werkzeughalter in einer Richtung senkrecht zur Ausfahrrichtung mindestens teilweise überlappen.

Diese Maßnahme hat den Vorteil, daß mit einfachen Mitteln eine Kippbewegung sicher vermieden wird, weil die beiden seitlichen Bolzen, unabhängig vom jeweiligen Werkzeug des Werkzeughalters in unmittelbarer Nähe des genormten Kegels herangefahren werden können, so daß keine merkbare Kippbewegung mehr möglich ist.

Bei einer bevorzugten Ausgestaltung dieser Variante sind die Bolzen mittels des Hebels verschiebbar.

Diese Maßnahme hat den Vorteil, daß der bereits für die Betätigung der Sperrteile vorgesehene Hebel gleichzeitig zum Verschieben der bolzen verwendet werden kann, so daß die bereits erläuterten Erwägungen hinsichtlich der Synchronisierung der verschiedenen Sperrteile im ein- und ausgefahrenen Zustand der Überführeinrichtung entsprechend gelten.

Bei einer weiteren bevorzugten Variante dieses Ausführungsbeispiels sind die Bolzen am Hebel mit horizontaler Schwenkachse angelenkt und horizontal im zweiten Halteteil geführt.

Diese Maßnahme hat den Vorteil, daß mit einfacher Kinematik die erforderliche Sperrwirkung erzielt werden kann.

Ausführungsbeispiele der Erfindung sind in der Zeichnung dargestellt und werden in der nachfolgenden Beschreibung näher erläutert. Es zeigen:
- Fig. 1: eine Seitenansicht, teilweise im Schnitt eines Ausführungsbeispiels einer erfindungsgemäßen Werkzeugmaschine mit eingefahrener Überführeinrichtung;
- Fig. 2: eine Darstellung, ähnlich Fig. 1, jedoch für den Zustand der ausgefahrenen Überführeinrichtung.

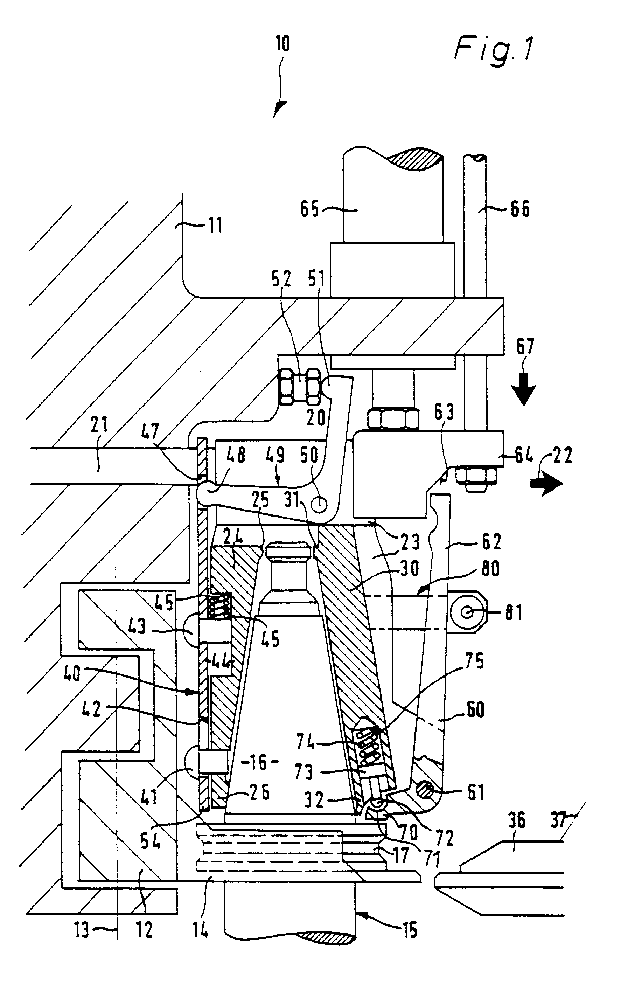

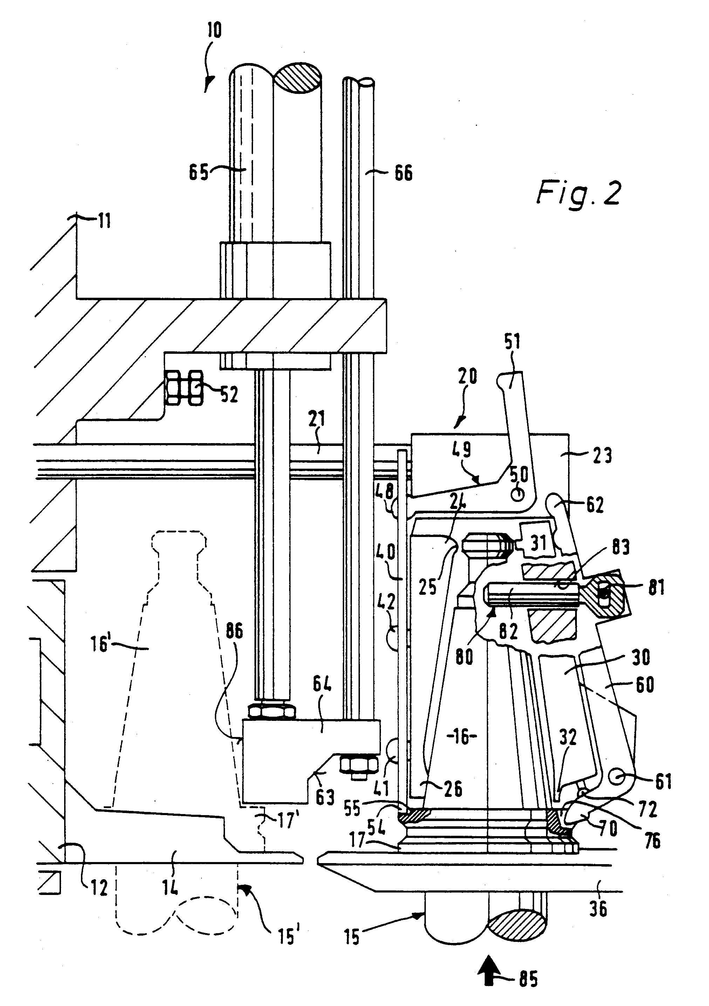

In den Fig. 1 und 2 bezeichnet 10 insgesamt ein Magazin einer Werkzeugmaschine, das ein raumfestes Gehäuse 11 aufweist. Mit 12 ist eine Aufnahme des Werkzeugmagazins angedeutet, die auf einer vorbestimmten Bahn im Magazin 10 neben zahlreichen anderen Aufnahmen verschiebbar ist, um mit wahlfreiem Zugriff Werkzeughalter in Übergabepositionen des Magazins 10 bringen zu können.

Einzelheiten zu einer derartigen Werkzeugmaschine sind in der DE-OS 35 21 009 beschrieben, deren Offenbarungsgehalt durch diesen Bezug zum Offenbarungsgehalt der vorliegenden Anmeldung gemacht wird.

Die Aufnahmen 12 sind um Achsen 13 drehbar und senkrecht zur Zeichenebene der Fig. 1 und 2 verschwenkbar. Die Aufnahmen 12 sind mit einer Hand 14 versehen, die in einer zu den Fig. 1 und 2 rechtwinkligen Ansicht eine U-förmige Gestalt aufweist.

Die Hand 14 hält einen Werkzeughalter 15 genormter Bauart, der im oberen Bereich einen Konus 16 und einen unten angrenzenden Ringflansch 17 aufweist. Infolge der U-förmigen Gestalt der Hand 14 sind die Werkzeughalter 15 in der Ansicht der Fig. 1 und 2 nach rechts aus der Aufnahme 12 entnehmbar.

Eine insgesamt mit 20 bezeichnete Überführeinrichtung weist eine Betätigungsstange 21 auf, die mit in den Fig. 1 und 2 nicht näher dargestellten Betätigungsmitteln in einer Ausfahrrichtung 22 und gegenläufig in einer Einfahrrichtung betätigbar ist.

Am vorderen freien Ende der Stange 21 ist ein Basisteil 23 angeordnet, das nach unten gabelförmig ausgebildet ist. Ein erstes Halteteil 24 schließt sich auf Seiten des Gehäuses 11 nach unten an das Basisteil 23 an und liegt mit einem oberen Ende 25 sowie einem unteren Ende 26 am oberen und unteren Ende des Konus 16 an, wenn die Überführeinrichtung 20 in Ausfahrrichtung 22 betätigt wird.

Im wesentlichen symmetrisch vom ersten Halteteil 24 ist am unteren vorderen Ende des Basisteils 23 ein zweites Halteteil 30 angeordnet, das mit einem oberen Ende 31 und einem unteren Ende 32 an entsprechenden oberen und unteren Enden des Konus 16 anliegt, wenn entgegen der Ausfahrrichtung 22 ein Werkzeughalter 15 in die Aufnahme 12 eingefahren werden soll.

Wie man aus Fig. 1 erkennen kann, sind die Halteteile 24, 30 so dimensioniert, daß eine freie Durchfahrt von Werkzeughaltern 15 möglich ist, weil die Enden 25, 26, 31, 32 mit etwas Spiel zum Konus 16 angeordnet sind. Auf diese Weise können die Aufnahmen 12 im Magazin 10 verfahren werden bis der gewünschte Werkzeughalter 15 sich in Flucht mit der Überführeinrichtung 20 befindet und durch Betätigen der Stange 21 ausgefahren werden kann.

Gegenüber der Öffnung der Hand 14 der Aufnahme 12 ist symmetrisch eine Öffnung eine Hand 36 eines nur schematisch angedeuteten Greifarms 37 der Werkzeugmaschine positioniert, wenn ein Werkzeugwechselvorgang vorgenommen werden soll. Durch Vergleich der Fig. 1 und 2 ist leicht erkennbar, daß ein Überführen eines Werkzeughalters 15 aus der Hand 14 in die Hand 36 durch axiales Verschieben in der Überführeinrichtung 20 bewerkstelligt wird.

Um ein Verdrehen und ein Verkippen des Werkzeughalters 15 während des Überführvorganges zu verhindern und zwar unabhängig davon, ob der Werkzeughalter 15 aus der Hand 14 in die Hand 36 oder umgekehrt gefördert werden soll, sind die folgenden Maßnahmen vorgesehen:
Ein erstes Sperrteil 40 ist plattenförmig ausgebildet und an der Rückseite des ersten Halteteils 24 in vertikaler Richtung verschiebbar gelagert. Hierzu ist ein erster Bolzen 41 fest mit dem ersten Halteteil 24 verbunden. Der erste Bolzen 41 läuft in einem sich vertikal erstreckenden Langloch 42 des ersten Sperrteils 40. Ein zweiter Bolzen 43 ist fest mit dem ersten Sperrteil 40 verbunden. Das freie Ende des zweiten Bolzens 43 läuft in einer länglichen Aussparung 44, die sich ebenfalls vertikal erstreckt. In der länglichen Aussparung 44 ist eine Feder 45 angeordnet, die in der in Fig. 1 dargestellten oberen Endstellung des ersten Sperrteils 40 zusammengedrückt ist.

Oberhalb des zweiten Bolzens 43 befindet sich im ersten Sperrteil 40 eine weitere Aussparung 47, in die ein erster Kugelkopf 48 am freien Ende eines Armes eines zweiarmigen Hebels 49 greift, der um eine horizontale Achse 50 drehbar ist. Ein zweiter Kugelkopf 51 am freien Ende des anderen Armes des Hebels 49 liegt in der in Fig. 1 dargestellten eingefahrenen Endstellung der Überführeinrichtung 20 an einem justierbaren gehäusefesten Anschlag 52 des Magazins 10 an.

Ein zweites Sperrteil 60 ist an der dem ersten Sperrteil 40 gegenüberliegenden Seite des Werkzeughalters 15 angeordnet. Das zweite Sperrteil 60 ist um eine horizontale Achse 61 drehbar. Ein oberes Ende 62 des zweiten Sperrteils 60 liegt an einer Fläche 63 eines Anschlagteils 64 an, das in vertikaler Richtung mittels einer Kolben-Zylinder-Einheit 65 und unter Führung einer Führungsstange 66 in Richtung eines Pfeiles 67 verschiebbar ist.

Ein unteres Ende 70 des zweiten Sperrteils 60 ist mit einer Pfanne 71 versehen, in die ein dritter Kugelkopf 72 greift. Der dritte Kugelkopf 72 bildet das freie Ende einer Stange eines Kolbens 73, der gegen die Kraft einer Feder 74 in einer Sackbohrung 75 des zweiten halteteils 30 läuft. In der in Fig. 1 dargestellten eingefahrenen Endstellung der Überführeinrichtung 20 ist die Feder 74 zusammengedrückt.

Ein drittes Sperrteil 80 weist in einer zu den Fig. 1 und 2 rechtwinkligen Ansicht ebenfalls eine gabelförmige Gestalt auf. Das dritte Sperrteil 80 ist um eine horizontale Achse 81 an der Rückseite des zweiten Sperrteils 60 verschwenkbar. Das dritte Sperrteil 80 ist mit zwei Bolzen 82 versehen, die in entsprechenden Bohrungen 83 im zweiten Halteteil 30 horizontal geführt sind.

Die Wirkungsweise der Überführeinrichtung 20 ist wie folgt:
In der eingefahrenen Endstellung der Überführeinrichtung 20, wie sie in Fig. 1 dargestellt ist, liegt der zweite Kugelkopf 51 des Hebels 49 am raumfesten Anschlag 52 an und ist in seine rechte Endstellung ausgelenkt. Der erste Kugelkopf 48 des in etwa einen rechten Winkel bildenden zweiarmigen Hebels 49 ist infolgedessen in seine obere Endlage verschwenkt und zieht durch Eingriff in die Aussparung 47 das erste Sperrteil 40 in seine obere Endstellung. In dieser Lage, in der der Bolzen 43 mit seinem freien Ende die Feder 45 vollständig komprimiert, ist ein unteres zungenförmiges Ende 54 des ersten Sperrteils 40 vom Ringflansch 17 des Werkzeughalters 15 in vertikaler Richtung abgehoben.

An der Vorderseite des Werkzeughalters 15 liegt das obere Ende 62 des zweiten Sperrteils 60 an der Fläche 63 des Anschlagteils 64 an und nimmt damit seine rechte Endstellung ein. Infolge der gewinkelten Anordnung des zweiten Sperrteils 60 als ebenfalls zweiarmiger Hebel ist das untere Ende 70 in seiner oberen Endstellung und drückt mit seiner Pfanne 71 den dritten Kugelkopf 72 und damit auch den Kolben 73 gegen die Feder 74, die in der Sackbohrung 75 vollständig komprimiert ist.

Durch die Auslenkung des zweiten Sperrteils 60 in die Endstellung, in der es um die horizontale Achse 61 in Uhrzeigerrichtung am meisten verschwenkt ist, ist auch das dritte Sperrteil 80 in Fig. 1 nach rechts ausgelenkt.

Infolge der vorstehend beschriebenen Positionen der drei Sperrteile 40, 60 und 80 ist der Werkzeughalter 15 in keiner Weise formschlüssig blockiert, weil sowohl die unteren Enden 54 und 70 der Sperrteile 40 und 60 vom Ringflansch 17 abgehoben sind wie auch die Bolzen 82 sich rechts vom Umriß des Werkzeughalters 15 - in der Ansicht der Fig. 1 und 2 - befinden.

Wird nun jedoch die Überführeinrichtung 20 in die in Fig. 2 dargestellte ausgefahrene Position verschwenkt, so verschiebt sich das erste Sperrteil 40 unter der Kraft der Feder 45 nach unten, weil der zweite Kugelkopf 51 vom raumfesten Anschlag 52 abhebt.

Entsprechendes gilt für das zweite Sperrteil 60, bei dem das obere Ende 62 von der Fläche 63 des Anschlagteils 64 abgehoben hat. Unter dem Druck der Feder 74 drückt sich der dritte Kugelkopf 72 in die Pfanne 71 am unteren Ende 70 des zweiten Sperrteils 60 und drückt dieses in eine Aussparung 76 an der oberen Vorderseite des Ringflansches 17.

Durch das Eingreifen der unteren Enden 54 und 70 in die Aussparungen 55 an der Rückseite und 76 an der Vorderseite des Ringflansches 17 ist somit der Werkzeughalter 15 in einer Drehstellung fixiert.

Durch die Drehung des zweiten Sperrteils 60 im Gegenuhrzeigersinn um die horizontale Achse 61 fahren außerdem die Bolzen 82 in den Bohrungen 83 in der Ansicht der Fig. 1 und 2 nach links, wodurch sie bis in den Umriß des Werkzeughalters 15 hineinragen, wie deutlich aus Fig. 2 zu erkennen ist. Auf diese Weise wird der Werkzeughalter 15 gegen eine Kippbewegung in einer Richtung senkrecht zur Zeichenebene der Fig. 2 gesichert.

Die vorstehend beschriebenen Sperrmechanismen werden auch wirksam, wenn die Überführeinrichtung 20 leer ausgefahren wurde und ein Greifarm 37 mit Hand 36 und einem darin angeordneten Werkzeughalter 15 herangefahren wird, um diesen, soeben aus der Spindel entnommenen Werkzeughalter 15 mittels der Überführeinrichtung 20 in das Magazin 10 zurückzubefördern. Der Werkzeughalter 15 wird bei einem solchen Vorgang nämlich von unten an die Überführeinrichtung 20 herangeführt, wie mit 85 in Fig. 2 angedeutet. Bei diesem Vorgang taucht der Werkzeughalter 15 mit seinem Konus von unten in den Eingriffsbereich der Sperrteile 40, 60 und 80 sowie der Halteteile 24 und 30, so daß sich die oben geschilderte Sperrung von selbst ergibt.

Es ist ferner aus Fig. 2 erkennbar, daß das Anschlagteil 64 in der ausgefahrenen Stellung der Überführeinrichtung 20 so weit nach unten verfahren werden kann, daß eine Rückseite 86 des Anschlagteils 64 als Führung für Werkzeughalter 15′ dient, die mit großer Geschwindigkeit in eine Richtung senkrecht zur Zeichenebene der Fig. 2 am Anschlagteil 64 vorbeigefahren werden, um die unbesetzte Aufnahme 12 heranzufahren, in die der in Fig. 2 noch im Bereich der Hand 36 gezeigte Werkzeughalter 15 eingesetzt werden soll. Da sich die Aufnahme 12, wie eingangs erläutert, am vorderen Ende einer kreisförmigen Bahn befindet, werden auf die Werkzeughalter 15′ bei ihrem Durchfahren durch die Fig. 2 erkennbare Position erhebliche Zentrifugalkräfte nach rechts in Fig. 2 ausgeübt, so daß die Rückseite 86 des Anschlagteils 64 in der in Fig. 2 dargestellten vertikalen Position ein Auswandern der Werkzeughalter 15′ verhindern kann.

Wenn die Verfahreinrichtung des Magazins 10 abgestoppt wird, weil die vorgewählte Aufnahme 12 nunmehr in Aufnahmeposition ist, wird die Kolben-Zylinder-Einheit 65 so weit nach oben verfahren, wie dies Fig. 1 zeigt. Wenn nun die Überführeinrichtung 20 nach links eingezogen wird, gelangt das obere Ende 62 des zweiten Sperrteils 60 von selbst in die in Fig. 1 gezeichnete Anlage, die von der Fläche 63 in diesem Augenblick als raumfester Anschlag gebildet wird, ähnlich wie die tatsächlich raumfeste Justierschraube 52, an die sich der zweite Kugelkopf 51 des Hebels 49 anlegt.

## Patentansprüche

1. Werkzeugmaschine mit einem Magazin (10) für Werkzeughalter (15), die einerseits im Magazin in entlang einer Bahn verfahrbaren Aufnahmen (12) angeordnet und andererseits an einer Übergabeposition des Magazins (10) mittels einer Überführeinrichtung (20) aus der Aufnahme (12) in eine Hand (36) eines Greifarms (37) überführbar sind, wobei die Überführeinrichtung (20) in horizontaler Richtung (22) ausfahrbar ist, und die Aufnahmen (12) bei ausgefahrener Überführeinrichtung (20) mit den noch im Magazin (10) befindlichen Werkzeughaltern (15) hinter der Überführeinrichtung (20) verfahrbar sind, dadurch gekennzeichnet, daß die Überführeinrichtung (20) Mittel zur drehfesten Arretierung der Werkzeughalter (15) aufweist, daß eine Kolben-Zylinder-Einheit (65) mit einem Anschlagteil (64) in vertikaler Richtung (67) zwischen den verfahrbaren Aufnahmen (12) und der ausgefahrenen Überführeinheit (20) verfahrbar und beim Einfahren der Überführeinrichtung (20) in eine erste Vertikalposition bringbar ist, in der das Anschlagteil (64) beim Einfahren der Überführeinrichtung (20) die Arretiermittel betätigt, während bei ausgefahrener Überführeinrichtung (20) die Kolben-Zylinder-Einheit (65) in eine zweite Vertikalposition bringbar ist, in der das Anschlagteil (64) eine Führung für die in den Aufnahmen (12) verfahrenen Werkzeughalter (15) bildet.

2. Werkzeugmasmachine nach Anspruch 1, dadurch gekennzeichnet, daß die Arretiermittel Sperrteile (40), 60) aufweisen, die in Aussparungen (55, 76) an einem Umfang des Werkzeughalters (15) greifen.

3. Werkzeugmaschine nach Anspruch 2, dadurch gekennzeichnet, daß die Sperrteile (40, 60) in im wesentlichen zur Längsachse der Werkzeughalter (15) paralleler Richtung in die Aussparungen (55, 76) greifen.

4. Werkzeugmaschine nach Anspruch 2 oder 3, dadurch gekennzeichnet, daß die Sperrteile (40, 60) unter der Kraft einer Feder (45, 74) in eine Sperrstellung bringbar sind.

5. Werkzeugmaschine nach einem oder mehreren der Ansprüche 2 bis 4, dadurch gekennzeichnet, daß die Sperrteile (40, 60) mit einem zweiarmigen Hebel (49/50, 60/61) versehen sind.

6. Werkzeugmaschine nach einem oder mehreren der Ansprüche 1 bis 5, dadurch gekennzeichnet, daß an einem Basisteil (23) der Überfübreinrichtung (20) ein um eine horizontale Achse (50) senkrecht zur Ausfahrrichtung (22) drehbarer zweiarmiger Hebel (49) angeordnet ist, der im eingefahrenen Zustand der Überführeinrichtung (20) mit einem Arm an einem raumfesten Anschlag (52) zur Anlage kommt und mit einem zweiten Arm ein erstes Sperrteil (40) gegen die Kraft einer Feder (45) aus eher Aussparung (55) am Umfang des Werkzeughalters (15) zieht.

7. Werkzeugmaschine nach Anspruch 6, dadurch gekennzeichnet, daß die Feder (45) in einem ersten Halteteil (24) angeordnet ist, das den Werkzeughalter (15) in Ausfahrrichtung (22) formschlüssig hält.

8. Werkzeugmaschine nach einem oder mehreren der Ansprüche 1 bis 7, dadurch gekennzeichnet, daß ein um eine horizontale Achse (61) drehbarer zweiarmiger Hebel (60/61) mit einem Arm an dem Anschlagteil (64) zur Anlage kommt und ein zweites Sperrteil (60) gegen die Kraft einer Feder (74) aus einer Aussparung (76) am Umfang des Werkzeughalters (15) zieht.

9. Werkzeugmaschine nach Anspruch 8, dadurch gekennzeichnet, daß die Feder (74) in einem zweiten Halteteil (30) angeordnet ist, das den Werkzeughalter (15) in Ausfahrrichtung (22) formschlüssig hält.

10. Werkzeugmaschine nach Anspruch 6 und 8, dadurch gekennzeichnet, daß das erste Sperrteil (40) auf der der Aufnahme (12) zu weisenden Seite des Werkzeughalters (15) und das zweite Sperrteil (60) auf der dem Greifer (36) zu weisenden Seite des Werkzeughalters (15) angeordnet ist.

11. Werkzeugmaschine nach einem oder mehreren der Ansprüche 1 bis 10, dadurch gekennzeichnet, daß ein drittes Sperrteil (80) zum Verhindern einer Kippbewegung senkrecht zu einer Ausfahrrichtung (22) der Überführeinrichtung (20) vorgesehen ist.

12. Werkzeugmaschine nach Anspruch 11, dadurch gekennzeichnet, daß das dritte Sperrteil (80) zwei seitlich vom Werkzeughalter (15) angeordnete und rechtwinklig zu dessen Achse verschiebbare Bolzen (82) aufweist, die im nicht-eingefahrenen Zustand der Überführeinrichtung (20) den Umriß der Werkzeughalter (15) in einer Richtung senkrecht zur Ausfahrrichtung (22) mindestens teilweise überlappen.

13. Werkzeugmaschine nach Anspruch 5 und 12, dadurch gekennzeichnet, daß die Bolzen (82) mittels des Hebels (60/61) verschiebbar sind.

14. Werkzeugmaschine nach Anspruch 9 und 13, dadurch gekennzeichnet, daß die Bolzen (82) am Hebel (60/61) mit horizontaler Schwenkachse (81) angelenkt und horizontal im zweiten Halteteil (30) geführt sind.

## Claims

1. A machine tool comprising a magazine (10) for tool holders (15) being on the one hand arranged in the magazine within fixtures (12) conveyable along a travel path, and on the other hand being transferable at a transfer position of the magazine (10) from the fixture (12) into a hand (36) or a gripper arm (37) by means of a transfer device (20), wherein the transfer device (20) is extendable in a horizontal direction (22) and the fixtures (12) may be conveyed behind the transfer device (20) in the extended position of the latter with the tool holders (15) being still in the magazine (10), characterized in that the transfer device (20) comprises means for rotationally locking the tool holders (15), that a piston-and-cylinder-unit (65) is displaceable with a stop portion (64) thereof in a vertical direction (67) between the conveyable fixtures (12) and the extended transfer device (20) and can be brought into a first vertical position in which the stop portion (64) actuates locking means during the retraction of the transfer device (20), whereas , in the extended position of the transfer device (20), the piston-and-cylinder-unit (65) can be brought into a second vertical position in which the stop portion (64) acts as a guide for the tool holders (15) conveyed in the fixtures (12).

2. The machine tool of claim 1, characterized in that the locking means comprise locking parts (40, 60) engaging recesses (55, 76) at a periphery of the tool holders (15).

3. The machine tool of claim 2, characterized in that the locking parts (40, 60) engage the recesses (55, 76) in a direction being essentially parallel to the longitudinal axis of the tool holders (15).

4. The machine tool of claim 2 or 3, characterized in that the locking parts (40, 60) may be brought into a locking position under the action of a spring (45, 74).

5. The machine tool of any of claims 2 through 4, characterized in that the locking parts (40, 60) are provided with a two-armed lever (49/50, 60/61).

6. The machine tool of any of claims 1 through 5, characterized in that a two-armed lever (49) being pivotable about a horizontal axis (50) perpendicular to the direction (22) of extension is arranged on a base part (23) of the transfer device (20), the lever contacting with one arm thereof a stationary stop (52) in the retracted position of the transfer device and withdrawing with its second arm a first locking part (40) against the action of a spring (45) from a recess (55) at the periphery of the tool holder (15).

7. The machine tool of claim 6, characterized in that the spring (45) is arranged in a first holding part (24) holding the tool holder (15) in a form-locking relationship in the direction (22) of extension.

8. The machine tool of any of claims 1 through 7, characterized in that a two-armed lever (60/61) being pivotable about a horizontal axis (61) contacts with one arm thereof a stop part (64) and withdraws a second locking part (60) against the action of a spring (74) from a recess (76) at the periphery of the tool holder (15).

9. The machine tool of claim 8, characterized in that the spring (74) is arranged in a second holding part (30) engaging the tool holder (15) in a form-locking relationship in the direction (22) of extension.

10. The machine tool of claims 6 and 8, characterized in that the first locking part (40) is arranged on the side of the tool holder (15) facing the fixture (12) and the second locking part (60) is arranged on that side of the tool holder (15) facing the gripper (36).

11. The machine tool of any of claims 1 through 10, characterized in that a third locking part (80) is provided for preventing a tilting motion in a direction perpendicular to the direction (22) of extension of the transfer device (20).

12. The machine tool of claim 11, characterized in that the third locking part (80) is provided with two pins (82) being arranged laterally with the respect to the tool holder and being displaceable perpendicularly to the axis of the latter, the pins at least partially overlapping the contour of the tool holder in a direction perpendicular to the direction (22) of extension in the non-retracted position of the transfer device (20).

13. The machine tool of claims 5 and 12, characterized in that the pins (82) are displaceable by means of the lever (60/61).

14. The machine tool of claim 9 and 13, characterized in that the pins (82) are hinged at the lever (60/61) about a horizontal axis (81) of pivoting and are guided horizontally in a second holding part (30).

## Revendications

1. Machine-outil avec un magasin (10) pour des porte-outils (15), qui sont disposés, d'une part, dans le magasin dans des logements (12) pouvant être déplacés le long d'une voie et peuvent, d'autre part, être transférés dans une position de sortie du magasin (10) au moyen d'un dispositif de transfert (20) du logement (12) à une pince (36) d'un bras de préhension (37), dans laquelle le dispositif de transfert (20) peut être sorti dans le sens horizontal (22), et les logements (12) peuvent être déplacés lorsque le dispositif de transfert (20) est sorti avec les porte-outils (15) se trouvant encore dans le magasin (10) derrière le dispositif de transfert (20), caractérisée en ce que le dispositif de transfert (20) présente des moyens pour l'arrêt en rotation des porte-outils (15), en ce qu'un vérin (65) avec une pièce de butée (64) peut être déplacé dans le sens vertical (67) entre les logements (12) mobiles et le dispositif de transfert (20) sorti et amené, lorsque le dispositif de transfert (20) est rétracté, dans une première position verticale, dans laquelle la pièce de butée (64) actionne lors de la rétraction du dispositif de transfert (20) les moyens d'arrêt, tandis que lorsque le dispositif de transfert (20) est sorti le vérin (65) peut être amené dans une seconde position verticale, dans laquelle la pièce de butée (64) forme un guide pour les porte-outils (15) déplacés dans les logements (12).

2. Machine-outil selon la revendication 1, caractérisée en ce que les moyens d'arrêt présentent des pièces de verrouillage (40, 60), qui se mettent en prise dans des évidements (55, 76) sur une circonférence du porte-outils (15).

3. Machine-outil selon la revendication 2, caractérisée en ce que les pièces de verrouillage (40, 60) se mettent en prise dans les évidements (55, 76) dans une direction sensiblement parallèle à l'axe longitudinal des porte-outils (15).

4. Machine-outil selon la revendication 2 ou 3, caractérisée en ce que les pièces de verrouillage (40, 60) peuvent être amenées sous la force d'un ressort (45, 76) à une position de verrouillage.

5. Machine-outil selon l'une ou plusieurs des revendications 2 à 4, caractérisée en ce que les pièces de verrouillage (40, 60) sont pourvues d'un levier à deux bras (49/50, 60/61).

6. Machine-outil selon l'une ou plusieurs des revendications 1 à 5, caractérisée en ce qu'est monté sur une pièce de base (23) du dispositif de transfert (20) un levier (49) à deux bras capable de rotation autour d'un axe (50) horizontal perpendiculaire à la direction de sortie (22), qui, lorsque le dispositif de transfert (20) est rétracté, vient en appui par un bras sur une butée (52) stationnaire et tire par un second bras une première pièce de verrouillage (40) contre la force d'un ressort (45) hors d'un évidement (55) sur la circonférence du porte-outils (15).

7. Machine-outil selon la revendication 6, caractérisée en ce que le ressort (45) est disposé dans une première pièce de maintien (24), qui maintient le porte-outils (15) par liaison positive dans la direction de sortie (22).

8. Machine-outil selon l'une ou plusieurs des revendications 1 à 7, caractérisée en ce qu'un levier (60/61) à deux bras rotatif autour d'un axe (61) horizontal vient en appui par un bras sur la pièce de butée (64) et tire une seconde pièce de verrouillage (60) contre la force d'un ressort (74) hors d'un évidement (76) sur la circonférence du porte-outils (15).

9. Machine-outil selon la revendication 8, caractérisée en ce que le ressort (74) est disposé dans une seconde pièce de maintien (30), qui maintient le porte-outils (15) par liaison positive dans la direction de sortie (22).

10. Machine-outil selon les revendications 6 et 8, caractérisée en ce que la première pièce de verrouillage (40) est disposée sur le côté du porte-outils (15) orienté vers le logement (12) et la seconde pièce de verrouillage (60) sur le côté du porte-outils (15) orienté vers la pince (36).

11. Machine-outil selon l'une ou plusieurs des revendications 1 à 10, caractérisée en ce qu'il est prévu une troisième pièce de verrouillage (80) destinée à empêcher un mouvement de basculement perpendiculaire à une direction de sortie (22) du dispositif de transfert (20).

12. Machine-outil selon la revendication 11, caractérisée en ce que la troisième pièce de verrouillage (80) présente deux broches (82) disposées sur les côtés du porte-outils (15) et mobiles perpendiculairement à l'axe de celui-ci, qui chevauchent au moins partiellement le contour du porte-outils (15) dans une direction perpendiculaire à la direction de sortie (22) lorsque le dispositif de transfert (20) n'est pas rétracté.

13. Machine-outil selon les revendications 5 et 12, caractérisée en ce que les broches (82) peuvent coulisser au moyen du levier (60/61).

14. Machine-outil selon les revendications 9 et 13, caractérisée en ce que les broches (82) sont articulées sur le levier (60/61) avec un axe de basculement (81) horizontal et sont guidées horizontalement dans la seconde pièce de maintien (30).
